# EUROPEAN PATENT APPLICATION

(11) **EP 4 398 398 A1**
(43) Date of publication of application: **10.07.2024**
(21) Application number: 23739845.8
(22) Date of filing: 03.01.2023
(51) Int. Cl.: H01M 50/30

(54) **ENERGY STORAGE CONTAINER**

(30) Priority: 14.01.2022 CN 202220093869 U
(71) Applicant: Contemporary Amperex Technology Co., Limited, Ningde, Fujian 352100 (CN)
(72) Inventor: ZHENG, Chenling, Ningde, Fujian 352100 (CN); LIU, Yue, Ningde, Fujian 352100 (CN); WANG, Zengzhong, Ningde, Fujian 352100 (CN)
(74) Representative: Frick, Robert
(86) International application number: PCT/CN2023/070155
(87) International publication number: WO 2023/134501

(57) **Abstract**

Embodiments of the present application provide an energy storage container that can balance thermal insulation and safety. The energy storage container comprises: a battery compartment (110) accommodating a plurality of batteries (10), wherein a venting channel (120) is provided between each battery (10) of the plurality of batteries (10) and a compartment wall (111) of the battery compartment (110), the venting channel (120) being used to discharge gases generated inside the battery (10) to the outside of the battery compartment (110), and an interior space of the venting channel (120) and an interior space of the battery compartment (110) being isolated from each other; and wherein the compartment wall (111) of the battery compartment (110) and/or the venting channel (120) are/is provided with a thermal insulation member (130), the thermal insulation member (130) being used to thermally insulate the interior space of the battery compartment (110).

## Description

### Cross-Reference to Related Application

The present application claims the priority to Chinese Patent Application 202220093869.5, filed on January 14, 2022 and entitled "ENERGY STORAGE CONTAINER", the entire contents of which are incorporated herein by reference.

### Technical Field

Embodiments of the present application relate to the field of energy storage, and more specifically, to an energy storage container.

### Background

In the context of the global increase in support for the development of new energy technologies, a variety of technologies related to energy storage have an important research significance, where the container as a way of energy storage has been widely used. In order to ensure the performance of batteries stored in the energy storage container, the design related to both the thermal insulation and safety of the energy storage container is very important.

In view of this, how to balance the thermal insulation and safety of energy storage containers is a technical problem that urgently needs to be solved.

### Summary of the Invention

The present application provides an energy storage container that can balance thermal insulation and safety.

In a first aspect, an energy storage container is provided, comprising: a battery compartment accommodating a plurality of batteries, wherein a venting channel is provided between each battery of the plurality of batteries and a compartment wall of the battery compartment, the venting channel being used to discharge gases generated inside the battery to the outside of the battery compartment, and an interior space of the venting channel and an interior space of the battery compartment being isolated from each other; and wherein the compartment wall of the battery compartment and/or the venting channel are/is provided with a thermal insulation member, the thermal insulation member being used to thermally insulate the interior space of the battery compartment.

By means of the technical solution of embodiments of the present application, in a battery compartment of the energy storage container, a venting channel is provided between each battery and the compartment wall of the battery compartment, and the venting channel is used to discharge high-temperature and high-pressure substances, such as gases, generated inside the battery to the outside of the battery compartment to prevent the high-temperature and high-pressure substances from affecting the other components of the battery compartment, thereby ensuring the safety performance of the battery compartment. On this basis, the compartment wall and/or the venting channel of the battery compartment is provided with a thermal insulation member, and this thermal insulation member is capable of insulating the interior space of the battery compartment to ensure the performance of the battery in the battery compartment.

In some possible implementations, the venting channel comprises a first venting channel segment and a second venting channel segment; and the plurality of batteries are connected in one-to-one correspondence to a plurality of first venting channel segments, the plurality of first venting channel segments being connected to at least one second venting channel segment, and the at least one second venting channel segment being connected to the compartment wall of the battery compartment.

By means of the technical solution of this implementation, the venting channel comprises two venting channel segments, and a plurality of first venting channel segments corresponding to the plurality of batteries are connected to at least one second venting channel segment, and the number of such second venting channel segments is small, so that it is possible to avoid influence of the plurality of venting channel segments being connected to the compartment wall of the battery compartment on the thermal insulation performance of the battery compartment.

In some possible implementations, the plurality of batteries are connected in one-to-one correspondence to a plurality of venting channels, the plurality of venting channels all being connected to the compartment wall of the battery compartment.

By means of the technical solution of this implementation, the dimensions of the venting channel corresponding to each battery can be the same, thus facilitating standardized production and manufacturing of the venting channel, and the venting channel can also be relatively conveniently mounted between the battery and the compartment wall of the battery, thereby improving the production efficiency of the energy storage container.

In some possible implementations, the compartment wall of the battery compartment is provided with a weak region, and the venting channel connects the battery with the weak region, wherein a thickness of the weak region is less than those of other regions of the compartment wall, and the weak region is used to rupture when a gas pressure inside the venting channel is greater than a threshold value so as to relieve the gas pressure.

By means of the technical solution of this implementation, a weak region is provided on the compartment wall of the battery compartment. This weak region is simple to implement and can realize the effect of pressure relief. Compared to the technical solution in which the region where the weak region is located is designed as a through hole, the weak region is capable of blocking the venting channel from the external environment, which reduces to a certain extent the influence of temperature changes in the external environment on the internal temperature of the venting channel, thus contributing to the enhancement of the thermal insulation performance of the battery compartment.

In some possible implementations, the compartment wall of the battery compartment is provided with a first pressure relief mechanism, and the venting channel connects the battery with the first pressure relief mechanism, the first pressure relief mechanism being used to be actuated when a gas pressure inside the venting channel is greater than a threshold value so as to relieve the gas pressure inside the venting channel.

By means of the technical solution of this implementation, the compartment wall of the battery compartment discharges the emissions of the battery through the first pressure relief mechanism, and the first pressure relief mechanism is highly reliable and can reliably ensure that the emissions of the battery are discharged to the outside of the battery compartment through the first pressure relief mechanism, thereby ensuring the safety of the energy storage container. In addition, this first pressure relief mechanism can also block the venting channel from the external environment, which is conducive to improving the thermal insulation performance of the battery compartment.

In some possible implementations, the battery is provided with a second pressure relief mechanism, the second pressure relief mechanism being used to be actuated when a gas pressure inside the battery is greater than a threshold value so as to relieve the gas pressure inside the battery; and the venting channel connecting the second pressure relief mechanism with the compartment wall of the battery compartment.

By means of the technical solution of this implementation, the venting channel is directly connected to the second pressure relief mechanism on the battery and to the compartment wall of the battery compartment, which can facilitate discharging through the venting channel all emissions discharged from the battery, and this method is efficient in collecting the gases and other emissions discharged from the battery, and can reliably ensure the safety performance of the energy storage container.

In some possible implementations, a dimension of the venting channel in the first direction is adapted to a dimension of the second pressure relief mechanism in the first direction, the first direction being parallel to a radial direction of the venting channel.

By means of the technical solution of this implementation, the venting channel can be reliably connected to the second pressure relief mechanism for the battery, thereby further contributing to improving the collection efficiency of the venting channel for emissions such as gases discharged from the battery, so as to further ensure the safety performance of the energy storage container.

In some possible implementations, the battery is provided with a mounting hole, with a first end of the venting channel being inserted into the mounting hole to realize a connection between the venting channel and the battery.

By means of the technical solution of this implementation, the venting channel is mounted in a simple manner, which can improve the overall manufacturing efficiency of the energy storage container.

In some possible implementations, a second pressure relief mechanism for the battery is correspondingly provided inside the mounting hole towards the battery.

By means of the technical solution of this implementation, the venting channel in the mounting hole is provided corresponding to the second pressure relief mechanism for the battery, and most of the emissions discharged from the battery can be discharged through the venting channel, thereby ensuring the safety performance of the energy storage container.

In some possible implementations, a second end of the venting channel has a first mounting portion in an annular structure, the first mounting portion being parallel to and abutting against the compartment wall of the battery compartment to realize a connection between the venting channel and the compartment wall of the battery compartment.

By means of the technical solution of this implementation, a second end of the venting channel has a first mounting portion, the first mounting portion being in an annular structure, and the annular structure being disposed parallel to the compartment wall of the battery compartment. The venting channel is attached to the compartment wall through the first mounting portion, which can increase the contact area between the venting channel and the compartment wall, thereby improving the reliability of mounting of the venting channel on the compartment wall.

In some possible implementations, the compartment wall of the battery compartment has a second mounting portion extending towards the interior of the battery compartment, the second mounting portion being sheathed into the inner wall or sleeving the outer wall of the venting channel to realize a connection between the venting channel and the compartment wall of the battery compartment.

By means of the technical solution of this implementation, the venting channel and the second mounting portion are sleeved with each other to realize the interconnection between the venting channel and the compartment wall of the battery compartment. This approach is simple to implement and the connection between the venting channel and the compartment wall is highly reliable, which is conducive to improving the reliability of mounting of the venting channel in the battery compartment and improving the productivity of the energy storage container.

In some possible implementations, at least one end of the venting channel is provided with a sealing member, and the venting channel is connected to the battery and/or to the compartment wall of the battery compartment through the sealing member.

By means of the technical solution of this implementation, the venting channel may be connected to the battery and/or to the compartment wall of the battery compartment through a sealing member, so as to ensure the sealing properties of the connection between the venting channel and the battery and/or the compartment wall of the battery compartment, and that emissions such as high-temperature and high-pressure gases discharged from the battery can be smoothly discharged to the outside of the battery compartment through the venting channel with good sealing properties, thereby ensuring the safety of the energy storage container.

In some possible implementations, the sealing member may be a sealing gasket or soft rubber.

In some possible implementations, the thermal insulation member provided on the venting channel and/or on the compartment wall of the battery compartment comprises: rock wool.

By means of the technical solution of this implementation, the thermal insulation member is easy to mount and arrange on the compartment wall and/or venting channel, and can provide better thermal insulation effects.

### Description of Drawings

To more clearly describe the technical solutions of embodiments of the present application, the drawings to be used in the examples of the present application will be briefly introduced below. Apparently, the drawings described below are merely some embodiments of the present application. For those of ordinary skills in the art, other drawings may also be obtained based on these drawings without making creative work.
Fig. 1 is a schematic diagram of the profile of an energy storage container disclosed in an embodiment of the present application;
Fig. 2 is a schematic structural diagram of an energy storage container disclosed in an embodiment of the present application;
Fig. 3 is a schematic structural diagram of another energy storage container disclosed in an embodiment of the present application;
Fig. 4 is a schematic structural diagram of another energy storage container disclosed in an embodiment of the present application;
Fig. 5 is a schematic structural diagram of another energy storage container disclosed in an embodiment of the present application;
Fig. 6 is a schematic structural diagram of another energy storage container disclosed in an embodiment of the present application;
Fig. 7 is a schematic structural diagram of a venting channel being connected to a compartment wall of a battery compartment as provided in an embodiment of the present application; and
Fig. 8 is a schematic structural diagram of another venting channel being connected to a compartment wall of a battery compartment as provided in an embodiment of the present application.

In the accompanying drawings, the accompanying drawings are not drawn to actual scale.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error.

Orientation words appearing in the following description are all directions shown in the drawings, and do not limit the specific structure of the present application. In the description of the present application, it should also be noted that, unless otherwise expressly specified and defined, the terms "mount", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the present application, the term "and/or" only describes an association relationship between associated objects and represents that three relationships may exist. For example, A and/or B may represent three situations: A exists, both A and B exist, and B exists. In addition, the character "/" in the present application generally means that the associated objects before and after it are in an "or" relationship.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "including" and "having" and any variations thereof in the specification and claims of the present application and in the description of drawings above are intended to cover non-exclusive inclusion. The terms "first", "second", and the like in the specification and claims of the present application or the above drawings are used to distinguish different objects, rather than used to describe specific orders or primary and secondary relationships.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

An energy storage container is an energy storage apparatus with a relatively high degree of integration. Specifically, the energy storage container may contain a battery compartment in which a plurality of batteries, a main control component, a busbar component, and a thermal management component, among other components, may be arranged.

Among them, a battery can also be referred to as an electrical box, which includes a box body and one or more battery cells encapsulated by this box body. Optionally, the battery cell may include a lithium-ion secondary battery, a lithium-ion primary battery, a lithium-sulfur battery, a sodium-lithium-ion battery, a sodium-ion battery, a magnesium-ion battery, or the like, which will not be limited in the embodiments of the present application. The battery cell may be cylindrical, flat, cuboid, or in other shapes, which is also not limited in embodiments of the present application.

Optionally, a plurality of batteries arranged in the battery compartment may be realized in series, parallel or series-parallel connection with each other. In some implementations, the plurality of batteries may be connected to the main control component via the busbar component, and electrical connection between the plurality of batteries may be implemented via the main control component.

In addition to the plurality of batteries, the main control component, and the busbar component, the energy storage container further comprises: a thermal management component. The thermal management component includes, but is not limited to, an air conditioning component, a fan component, a water-cooled pipe, and the like, which may be used to thermally manage the interior of the energy storage container so as to adjust the temperature of the interior of the energy storage container.

For the box body of the battery, in order to prevent the external environment from affecting the battery cells accommodated therein, the box body of the battery has certain sealing properties. For a battery cell in the battery, during the operation of that battery cell, the internal pressure or temperature of that battery cell can be changed due to chemical reactions inside that battery cell. In order to ensure the safety of the battery as a whole, the box body and battery cell of the battery will be equipped with pressure relief mechanisms.

The pressure relief mechanism on the battery cell refers to an element or component that is actuated to relieve the internal pressure or temperature of a battery cell when the internal pressure or temperature reaches a predetermined threshold value. When the pressure relief mechanism on the battery cell is actuated, high-temperature and high-pressure substances inside the battery cell are relieved to the box body through the pressure relief mechanism on this battery cell. Further, when the internal pressure or temperature of the box body reaches a preset threshold value, the pressure relief mechanism on the box body is also actuated, so that high-temperature and high-pressure substances from the inside of the battery cell are relieved to the battery compartment through the pressure relief mechanism on the box body.

By means of the above implementation, although the safety performance of the battery can be ensured to a certain extent, when the pressure relief mechanism on the battery box body is actuated, high-temperature and high-pressure substances from the inside of the battery will enter the battery compartment in the energy storage container body, thus introducing a certain safety hazard in the battery compartment.

In addition, for a battery, its performance is closely related to the ambient temperature it is exposed to. For example, if the ambient temperature is too high, it will increase the risk of battery failure and explosion, and if the ambient temperature is too low, it will affect the electrochemical reaction inside the battery, thus affecting the normal operation and service life of the battery. Therefore, the energy storage container used to store batteries needs to have good thermal insulation performance to reduce the impact of external environmental changes on the batteries, thus ensuring the performance of the batteries.

In view of the above, the present application provides an energy storage container, and in a battery compartment of this energy storage container, a venting channel is provided between each battery and the compartment wall of the battery compartment, and the venting channel is used to discharge high-temperature and high-pressure substances generated inside the battery to the outside of the battery compartment to prevent the high-temperature and high-pressure substances from affecting other components of the battery compartment, thereby ensuring the safety performance of the battery compartment. On this basis, the compartment wall and/or the venting channel of the battery compartment is provided with a thermal insulation member, and this thermal insulation member is capable of insulating the interior space of the battery compartment to ensure the performance of the battery in the battery compartment.

The technical solutions described in embodiments of the present application are applicable to various types and dimensions of energy storage containers. For example, this energy storage container may be a standard 40-foot or 20-foot container, or, alternatively, a specific container with customized dimensions. Batteries accommodated in the energy storage container include, but are not limited to: lithium batteries, such as lithium iron phosphate, lithium manganate, or lithium cobaltate batteries, among others.

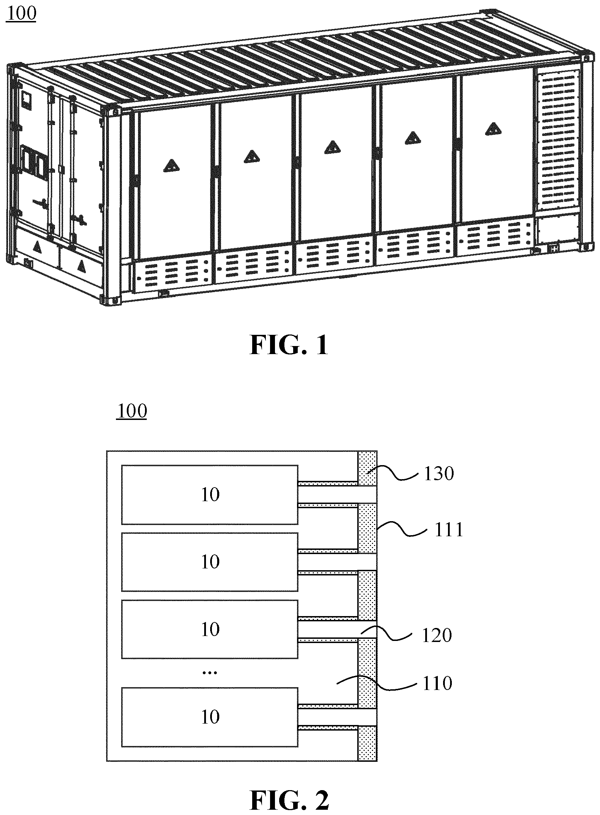

Fig. 1 illustrates a schematic diagram of the profile of an energy storage container 100 as provided in an embodiment of the present application.

As shown in Fig. 1, the energy storage container 100 may be in a regular cuboid structure, wherein the six faces of the cuboid are the six outer walls of the energy storage container 100. Setting the energy storage container 100 in a cuboid structure can facilitate the fixed placement and transportation of this energy storage container 100.

The interior of the energy storage container 100 is in a hollow structure, which may include a battery compartment to facilitate the arrangement of a plurality of batteries in the battery compartment. Furthermore, in addition to the battery compartment, the interior of the energy storage container 100 may be divided into a plurality of functional compartments in accordance with actual needs, and each functional compartment is provided with other functional device components for management or assistant operations of the plurality of batteries, for example, a busbar component, a main control component, a thermal management component, and the like.

Fig. 2 illustrates a schematic structural diagram of an energy storage container 100 as provided in another embodiment of the present application.

As shown in Fig. 2, in an embodiment of the present application, the energy storage container 100 comprises: a battery compartment 110 accommodating a plurality of batteries 10, wherein a venting channel 120 is provided between each battery 10 of the plurality of batteries 10 and a compartment wall 111 of the battery compartment 110, the venting channel 120 being used to discharge gases generated inside the battery 10 to the outside of the battery compartment 110, and an interior space of the venting channel 120 and an interior space of the battery compartment 110 being isolated from each other. In addition, the compartment wall 111 of the battery compartment 110 and/or the venting channel 120 are/is provided with a thermal insulation member 130, the thermal insulation member 130 being used to thermally insulate the interior space of the battery compartment 110.

Specifically, in the embodiment shown in Fig. 2, only the battery compartment 110 in the energy storage container 100 is schematically illustrated, and only part of the batteries 10 in the energy storage container 100 are schematically illustrated. The energy storage container 100 may include other functional compartments in addition to the battery compartment 110, and embodiments of the present application do not specifically limit the internal structure of the energy storage container 100.

Optionally, the compartment wall 111 of the battery compartment 110 may be an outer wall of the energy storage container 100, which is in contact with the external environment in which the energy storage container 100 is located. Alternatively, the compartment wall 111 of the battery compartment 110 may also be an inner wall of the energy storage container 100. For example, the compartment wall 111 may be a wall shared between the battery compartment 110 and other functional compartments in the energy storage container 100.

Specifically, when a certain battery 10 accommodated in the battery compartment 110 explodes, high-temperature and high-pressure substances generated therein are relieved to the battery compartment 110, which can affect other batteries 10 as well as other associated electrical components in the battery compartment 110, which in turn may lead to a greater safety issue. Therefore, in order to prevent such a phenomenon from occurring, a venting channel 120 is provided between each battery 10 in the battery compartment 110 and the compartment wall 111 of the battery compartment 110, so that when any one battery 10 in the battery compartment 110 explodes, the high-temperature and high-pressure substances generated therein can be discharged to the outside of the battery compartment 110 through the venting channel 120, so as to ensure the safety of the battery compartment 110.

Optionally, the channel wall of the venting channel 120 may be made of a rigid material or may also be made of a flexible material, as long as it is capable of resisting the shock and temperature of the high-temperature and high-pressure substances that are relieved from the battery 10, and embodiments of the present application do not limit the specific implementation of the channel wall of the venting channel 120.

It is to be noted that the high-temperature and high-pressure substances relieved from the battery 10 include, but are not limited to: an electrolyte, solid fragments that have been dissolved or split, high-temperature and high-pressure gases generated by reactions, flames, and the like.

Optionally, as shown in Fig. 2, the venting channel 120 is a rectilinearly shaped channel of which the axial dimension may be a linear distance between the battery 10 and the compartment wall 111 of the battery compartment 110 to allow substances discharged from the battery 10 to quickly pass through the venting channel 120 to reach the compartment wall 111 of the battery compartment 110.

Alternatively, in other implementations, the venting channel 120 may also be connected in a folded or curved line shape between the battery 10 and the battery compartment wall 111 of the battery compartment 110 according to the arrangement of relevant components in the battery compartment 110. Embodiments of the present application do not limit the specific shape of this venting channel 120.

In addition, since the interior space of the venting channel 120 and the interior space of the battery compartment 110 are isolated from each other, in order to prevent the temperature change of the interior space of the venting channel 120 from affecting the performance of the battery 10 in the battery compartment 110, as shown in Fig. 2, this venting channel 120 may be provided with a thermal insulation member 130 to further isolate the interior space of the venting channel 120 from the interior space of the battery compartment 110, and to thermally insulate the interior space of the battery compartment 110, thereby ensuring the performance of the battery 10 accommodated in the battery compartment 110.

Furthermore, the compartment wall 111 of the battery compartment 110 may also be provided with a thermal insulation member 130, and the thermal insulation member 130 provided on the compartment wall 111 can similarly thermally insulate the interior space of the battery compartment 110, thereby ensuring the performance of the battery 10 accommodated in the battery compartment 110.

Optionally, in the embodiment of the present application, the thermal insulation member 130 includes, but is not limited to, rock wool, which is easy to mount and arrange on the compartment wall 111 and/or the venting channel 120, and can provide good thermal insulation effect.

In summary, by means of the technical solution of embodiments of the present application, in the battery compartment 110 of the energy storage container 100, a venting channel 120 is provided between each battery 10 and the compartment wall 111 of the battery compartment 110, and the venting channel 120 is used to discharge high-temperature and high-pressure substances, such as gases, generated inside the battery 10 to the outside of the battery compartment 110 to prevent the high-temperature and high-pressure substances from affecting other components of the battery compartment 110, thereby ensuring the safety performance of the battery compartment 110. On this basis, the compartment wall 111 and/or the venting channel 120 of the battery compartment 110 is provided with a thermal insulation member 130, and this thermal insulation member 130 is capable of insulating the interior space of the battery compartment 110 to ensure the performance of the battery 10 in the battery compartment 110.

Optionally, in some implementations, as shown in Fig. 2, the plurality of batteries 10 are connected in one-to-one correspondence to a plurality of venting channels 120, the plurality of venting channels 120 all being connected to the compartment wall 111 of the battery compartment 110.

Specifically, in this implementation, the number of venting channels 120 is equal to the number of batteries 10, a plurality of venting channels 120 corresponding to the batteries 10 are provided discretely from each other, and the venting channels 120 corresponding to different batteries 10 are not in communication with each other.

In this implementation, the dimensions of the venting channel 120 corresponding to each battery 10 can be the same, thus facilitating the standardized production and manufacturing of the venting channel 120, and the venting channel 120 can also be relatively conveniently mounted between the battery 10 and the compartment wall 111 of the battery 110, thereby improving the production efficiency of the energy storage container 100.

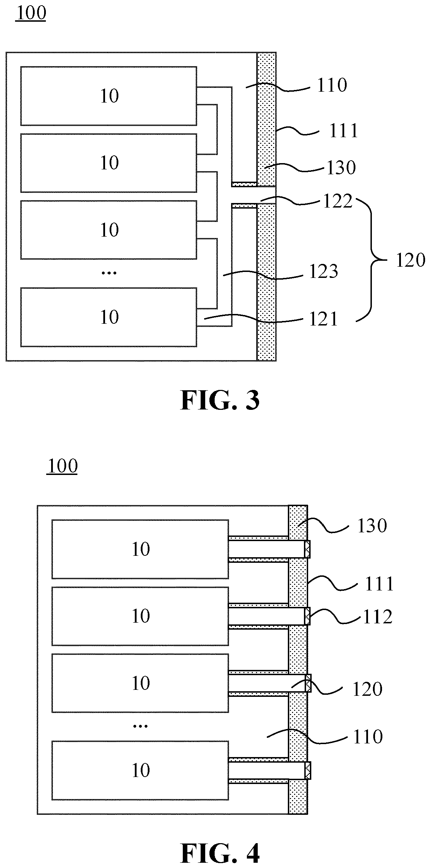

Fig. 3 illustrates a schematic structural diagram of an energy storage container 100 as provided in another embodiment of the present application.

As shown in Fig. 3, in an embodiment of the present application, the venting channel 120 comprises a first venting channel segment 121 and a second venting channel segment 122, and the plurality of batteries 10 are connected in one-to-one correspondence to a plurality of first venting channel segments 121, the plurality of first venting channel segments 121 being connected to at least one second venting channel segment 122, and the at least one second venting channel segment 122 being connected to the compartment wall 111 of the battery compartment 110.

Specifically, in the embodiment of the present application, venting channels 120 corresponding to different batteries 10 are in communication with each other. The number of first venting channel segments 121 interconnected with the plurality of batteries 10 is equal to the number of batteries 10, whereas the number of second venting channel segments 122 connected to the plurality of first venting channel segments 121 is less than the number of batteries 10.

As an example and not as a limitation, the number of second venting channel segments 122 is 1, as shown in Fig. 3.

Optionally, in the embodiment shown in Fig. 3, both the first venting channel segments 121 and the second venting channel segment 122 may be viewed as rectilinearly shaped venting channel segments, and the axial directions of both the first venting channel segments 121 and the second venting channel segment 122 are perpendicular to the compartment wall 111 of the battery compartment 110. The plurality of first venting channel segments 121 are connected to the second venting channel segment 122 via a third venting channel segment 123 to realize a complete venting channel 120 between the battery 10 and the compartment wall 111. This third venting channel segment 123 can also be viewed as a rectilinearly shaped venting channel segment, and the axial direction of this third venting channel segment 123 is parallel to the battery compartment wall 111 of the battery compartment 110.

It can be understood that Fig. 3, only as an illustration and not as a limitation, shows the form of the first venting channel segments 121 and the second venting channel segment 122 and the connection manner thereof as provided in an embodiment of the present application, and that, in addition to the first venting channel segments 121 and the second venting channel segment 122 being rectilinearly shaped channel segments and the first venting channel segments 121 being connected to the second venting channel segment 122 through the third venting channel segment 123 as shown in Fig. 3, the first venting channel segments 121 may also be directly connected to the second venting channel segment 122, and the first venting channel segments 121 and the second venting channel segment 122 may also be curved or folded line shaped channel segments, and embodiments of the present application do not make any specific limitations on the form of the first venting channel segments 121 and the second venting channel segment 122, or the connection method.

In the implementation shown in Fig. 3, the first venting channel segments 121 are perpendicular to the wall of the battery 10 to which they are connected, and thus, emissions from the interior of the battery 10 can be quickly discharged through the first venting channel segments 121. In addition, the vertical third venting channel segment 123 can facilitate the connection of the first venting channel segments 121 and the second venting channel segment 122, and as the overall design of the venting channel 120 is regular, it is also easy for this venting channel 120 to be mounted in the battery compartment 110.

By means of the technical solution of embodiments of the present application, the venting channel 120 comprises two venting channel segments, and a plurality of first venting channel segments 121 corresponding to the plurality of batteries 10 are connected to at least one second venting channel segment 122, and the number of such second venting channel segments 122 is small, so that it is possible to avoid influence of the plurality of venting channel segments 120 being connected to the compartment wall 111 of the battery compartment 110 on the thermal insulation performance of the battery compartment 110.

Optionally, as shown in Fig. 3, since the second venting channel segment 122 is connected to the compartment wall 111, the second venting channel segment 122 is susceptible to the influence of the external environment, whereas the first venting channel segments 121 are provided away from the compartment wall 111, and the first venting channel segments 121 are less affected by the external environment. Thus, in the embodiment shown in Fig. 3, the thermal insulation member 130 may be provided only in the second venting channel segment 122 and not in the first venting channel segments 121.

Alternatively, in other implementations, the thermal insulation member 130 may also completely cover all of the venting channel segments of the venting channel 120, i.e., cover the first venting channel segments 121, the second venting channel segment 122, and the third venting channel segment 123.

Based on the embodiment shown in Fig. 2, Fig. 4 illustrates a schematic structural diagram of an energy storage container 100 as provided in another embodiment of the present application.

As shown in Fig. 4, in an embodiment of the present application, the compartment wall 111 of the battery compartment 110 is provided with a weak region 112, and the venting channel 120 connects the battery 10 with the weak region 112, wherein a thickness of the weak region 112 is less than those of the other regions of the compartment wall 111, and the weak region 112 is used to rupture when a gas pressure inside the venting channel 120 is greater than a threshold value so as to relieve the gas pressure.

Optionally, the material of the weak region 112 may be different than the material of the compartment wall 111. For example, the strength of the material of the weak region 112 is less than the strength of the material of the compartment wall 111 to make the weak region 112 more susceptible to rupture under pressure as compared to the compartment wall 111. Alternatively, the thickness of the weak region 112 may be less than the thickness of the compartment wall 111, which may also make the weak region 112 more susceptible to rupture under pressure as compared to the compartment wall 111.

Optionally, the weak region 112 may be in the form of grooves, indentations, and many other forms, which have a simple implementation and can achieve the effect of pressure relief. Compared to the technical solution in which the region where the weak region 112 is located is designed as a through hole, the weak region 112 is capable of blocking the venting channel 120 from the external environment, which reduces to a certain extent the influence of temperature changes in the external environment on the internal temperature of the venting channel 120, thus contributing to the enhancement of the thermal insulation performance of the battery compartment 110.

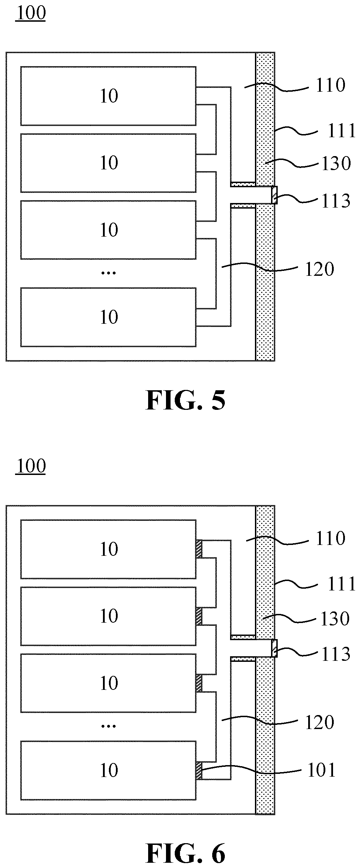

Based on the embodiment shown in Fig. 3, Fig. 5 illustrates a schematic structural diagram of an energy storage container 100 as provided in another embodiment of the present application.

As shown in Fig. 5, in an embodiment of the present application, the compartment wall 111 of the battery compartment 110 is provided with a first pressure relief mechanism 113, and the venting channel 120 connects the battery 10 with the first pressure relief mechanism 113, the first pressure relief mechanism 113 being used to be actuated when a gas pressure inside the venting channel 120 is greater than a threshold value so as to relieve the gas pressure inside the venting channel 120.

Specifically, in the embodiment of the present application, the first pressure relief mechanism 113 may be a pressure-sensitive type component. This first pressure relief mechanism 113 has a preset actuation pressure threshold value, and when the gas pressure inside the venting channel 120 is greater than this preset actuation pressure threshold value, the first pressure relief mechanism 113 can be actuated to relieve the gas pressure inside the venting channel 120. As an example, this first pressure relief mechanism 113 may be an explosion-proof pressure relief component such as an explosion-proof valve, an explosion-proof plate, or an explosion-proof sheet.

By means of the technical solution of this embodiment, the emissions of the battery 10 are discharged through the first pressure relief mechanism 113, and this first pressure relief mechanism 113 is highly reliable and can reliably ensure that the emissions of the battery 10 are discharged to the outside of the battery compartment 110 through this first pressure relief mechanism 113, thereby ensuring the safety of the energy storage container 100. In addition, this first pressure relief mechanism 113 can also block the venting channel 120 from the external environment of the battery compartment 110, which is conducive to improving the thermal insulation performance of the battery compartment 110. On this basis, if the plurality of batteries 10 in the battery compartment 110 are connected to the compartment wall of the battery compartment 110 through a small number of second venting channel segments 122, the number of first pressure relief mechanisms 113 connected to such second venting channel segments 122 is also small, thereby enabling a reduction in the overall manufacturing cost of the energy storage container 100.

It is noted that in the example shown in Fig. 5, the first pressure relief mechanism 113 is provided at one end of the second venting channel segment 122 in the embodiment shown in Fig. 3, and in addition to the manner shown in this example, this first pressure relief mechanism 113 may also be provided at one end of each venting channel 120 in the embodiment shown in Fig. 2.

Similarly, in the example shown in Fig. 4, the weak region 112 is provided at one end of each venting channel 120 in the embodiment shown in Fig. 2, and in addition to the manner shown in this example, this weak region 112 may also be provided at one end of the second venting channel segment 122 in the embodiment shown in Fig. 3.

Fig. 6 illustrates a schematic structural diagram of an energy storage container 100 as provided in another embodiment of the present application.

As shown in Fig. 6, in an embodiment of the present application, the battery 10 is provided with a second pressure relief mechanism 101, the second pressure relief mechanism 101 being used to be actuated when a gas pressure inside the battery 10 is greater than a threshold value so as to relieve the gas pressure inside the battery 10, and the venting channel 120 connecting the second pressure relief mechanism 101 with the battery compartment wall 111 of the battery compartment 110.

Specifically, in the embodiment of the present application, the second pressure relief mechanism 101 provided on the battery 10 is a pressure relief mechanism on the box body of the battery 10, and this second pressure relief mechanism 101 may also be a pressure-sensitive component, for example, an explosion-proof valve, an explosion-proof plate, an explosion-proof sheet, and the like.

When at least one battery cell inside the battery 10 explodes and relieves emissions such as high-temperature and high-pressure gases, the emissions will be discharged via this second pressure relief mechanism 101, and the venting channel 120 is directly connected to the second pressure relief mechanism 101 on the battery 10, so that it can facilitate discharging through the venting channel 120 all the emissions discharged from the battery 10, and this approach has a high collection efficiency for the emissions such as gases discharged from the battery 10, and can reliably ensure the safety performance of the energy storage container 100.

Optionally, in order to ensure the effect of the connection between the venting channel 120 and the second pressure relief mechanism 101, the dimension of the venting channel 120 in the first direction is adapted to the dimension of the second pressure relief mechanism 101 in the first direction, wherein the first direction is parallel to the radial direction of the venting channel 120.

By means of the technical solution of this implementation, the venting channel 120 can be reliably connected to the second pressure relief mechanism 101 for the battery 10, thereby further contributing to improving the collection efficiency of the venting channel 120 for emissions such as gases discharged from the battery 10, so as to further ensure the safety performance of the energy storage container 100.

In addition to the venting channel 120 being connected to the second pressure relief mechanism 101 for the battery 10 as described above to realize the connection between the venting channel 120 and the battery 10, optionally, in some other implementations, the battery 10 is provided with a mounting hole, with a first end of the venting channel 120 being inserted into the mounting hole to realize a connection between the venting channel 120 and the battery 10.

Specifically, in this implementation, the box body of the battery 10 is provided with a mounting hole, wherein the size of the mounting hole may be adapted to a radial dimension of the venting channel 120 to facilitate the insertion of the venting channel 120. By means of the technical solution of this implementation, the venting channel 120 is mounted in a simple manner, which can improve the overall manufacturing efficiency of the energy storage container 100.

On this basis, in order to facilitate improving the collection efficiency of the venting channel 120 for the emissions such as gases discharged from the battery 10, a second pressure relief mechanism 101 for the battery 10 may be correspondingly provided inside the above mounting hole towards the battery 10. In this case, the venting channel 120 in the mounting hole is provided corresponding to the second pressure relief mechanism 101 for the battery 10, and most of the emissions discharged from the battery 10 can be discharged through the venting channel 120, thereby ensuring the safety performance of the energy storage container 100.

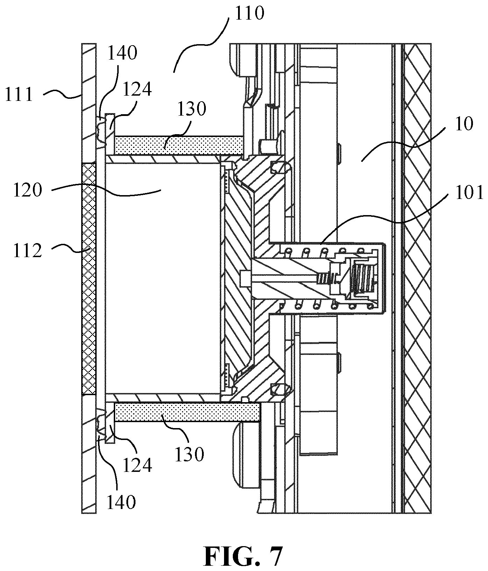

Fig. 7 illustrates a schematic structural diagram of a venting channel 120 being connected to a compartment wall 111 of a battery compartment 110 as provided in an embodiment of the present application.

As shown in Fig. 7, in an embodiment of the present application, a second end of the venting channel 120 has a first mounting portion 124 in an annular structure, the first mounting portion 124 being parallel to and abutting against the compartment wall 111 of the battery compartment 110 to realize a connection between the venting channel 120 and the compartment wall 111 of the battery compartment 110.

As an example, in the embodiment shown in Fig. 7, a first end of the venting channel 120 is connected to the second pressure relief mechanism 101 for the battery 10, and the second end of the venting channel 120 abuts against the compartment wall 111 of the battery compartment 110. Alternatively, as an alternative implementation, the first end of the venting channel 120 may also be inserted into the mounting hole of the box body of the battery 10.

As an example, in the embodiment shown in Fig. 7, the compartment wall 111 may be provided with a weak region 112, and the second end of the venting channel 120 may be oriented towards the weak region 112. Alternatively, as an alternative implementation, the compartment wall 111 may also be provided with a first pressure relief mechanism 113, and the second end of the venting channel 120 may be connected to this first pressure relief mechanism 113. Further, alternatively, as another alternative implementation, the compartment wall 111 may also be provided with a through hole, and the second end of the venting channel 120 may be oriented towards the through hole.

Alternatively, in the embodiment shown in Fig. 7, the second end of the venting channel 120 has a first mounting portion 124, wherein this first mounting portion 124 may be in an annular structure, and this annular structure is disposed parallel to the compartment wall 111 of the battery compartment 110. The venting channel 120 is attached to the compartment wall 111 through the first mounting portion 124, which can increase the contact area between the venting channel 120 and the compartment wall 111, thereby improving the reliability of mounting of the venting channel 120 on the compartment wall 111.

Optionally, after this first mounting portion 124 is attached to the compartment wall 111, the two may be reliably connected to each other by various connecting means in the related art, such as, for example, the connection of the two is implemented by a welding process, or, the connection is implemented by a mechanical structural member, such as a bolt, and so on, and embodiments of the present application do not limit the specific manner of connection between this second mounting portion 124 and the compartment wall 111.

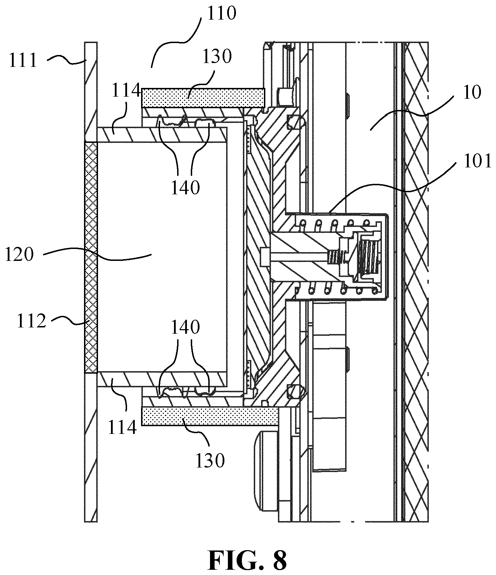

Fig. 8 illustrates a schematic structural diagram of a venting channel 120 being connected to a compartment wall 111 of a battery compartment 110 as provided in another embodiment of the present application.

As shown in Fig. 8, the compartment wall 111 of the battery compartment 110 has a second mounting portion 114 extending towards the interior of the battery compartment 110, the second mounting portion 114 being sheathed into the inner wall or sleeving the outer wall of the venting channel 120 to realize a connection between the venting channel 120 and the compartment wall 111 of the battery compartment 110.

By way of example, in the embodiment shown in Fig. 8, a first end of the venting channel 120 is connected to the second pressure relief mechanism 101 for the battery 10, and a second end of the venting channel 120 sleeves the second mounting portion 114. Alternatively, as an alternative implementation, the first end of the venting channel 120 may also be inserted into the mounting hole of the box body of the battery 10. Further, alternatively, as another alternative implementation, the second end of the venting channel 120 is sleeved with the second mounting portion 114.

As an example, in the embodiment shown in Fig. 8, the compartment wall 111 may be provided with a weak region 112, with the second mounting portion 114 being provided around this weak region 112. Alternatively, as an alternative implementation, the compartment wall 111 may also be provided with a first pressure relief mechanism 113, with the second mounting portion 114 being provided around this first pressure relief mechanism 113. Further, alternatively, as another alternative implementation, the compartment wall 111 may also be provided with a through hole, with the second mounting portion 114 being provided around the through hole.

Alternatively, in the embodiment shown in Fig. 8, the second mounting portion 114 is of a tubular structure, and its cross-sectional shape may be the same as the cross-sectional shape of the venting channel 120 to enable the two to be well adapted to and sleeved with each other.

By means of the technical solution of embodiments of the present application, the venting channel 120 and the second mounting portion 114 are sleeved with each other to realize the interconnection between the venting channel 120 and the compartment wall 111 of the battery compartment 110. This approach is simple to implement and the connection between the venting channel 120 and the compartment wall 111 is highly reliable, which is conducive to improving the reliability of mounting of the venting channel 120 in the battery compartment 110 and improving the productivity of the energy storage container 100.

Optionally, in some implementations, at least one end of the venting channel 120 is provided with a sealing member 140, and the venting channel 120 is connected to the battery 10 and/or to the compartment wall 111 of the battery compartment 110 through the sealing member 140.

For example, referring to Fig. 7, a second end of the venting channel 120 is provided with a first mounting portion 124, and the first mounting portion 124 is attached to the compartment wall 111 of the battery compartment 110 via the sealing member 140.

As another example, referring to Fig. 8, in the case where the venting channel 120 sleeves the second mounting portion 114, an outer wall of the venting channel 120 proximate to the second end thereof may be provided with a sealing member 140, and the venting channel 120 and the second mounting portion 114 are interconnected with each other by the sealing member 140.

Optionally, in the embodiment shown in Fig. 8, the sealing member 140 may be disposed proximate to an end of the second mounting portion 114 towards the battery 10, in addition to being disposed proximate to the second end of the venting channel 120. In the embodiment shown in Fig. 8, the number of such sealing members 140 may be a plurality.

Optionally, the sealing member 140 includes, but is not limited to: a sealing gasket or soft rubber.

By means of the technical solution of embodiments of the present application, the venting channel 120 may be connected to the battery 10 and/or to the compartment wall 111 of the battery compartment 110 through a sealing member 140, so as to ensure the sealing properties of the connection between the venting channel 120 and the battery 10 and/or the compartment wall 111 of the battery compartment 110, and that emissions such as high-temperature and high-pressure gases discharged from the battery 10 can be smoothly discharged to the outside of the battery compartment 110 through the venting channel 120 with good sealing properties, thereby ensuring the safety of the energy storage container 100.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. An energy storage container (100), comprising:
a battery compartment (110) accommodating a plurality of batteries (10),
wherein a venting channel (120) is provided between each battery (10) of the plurality of batteries (10) and a compartment wall (111) of the battery compartment (110), the venting channel (120) being used to discharge gases generated inside the battery (10) to the outside of the battery compartment (110), and an interior space of the venting channel (120) and an interior space of the battery compartment (110) being isolated from each other; and
wherein the compartment wall (111) of the battery compartment (110) and/or the venting channel (120) are/is provided with a thermal insulation member (130), the thermal insulation member (130) being used to thermally insulate the interior space of the battery compartment (110).

2. The energy storage container (100) according to claim 1, wherein the venting channel (120) comprises a first venting channel segment (121) and a second venting channel segment (122); and
the plurality of batteries (10) are connected in one-to-one correspondence to a plurality of first venting channel segments (121), the plurality of first venting channel segments (121) being connected to at least one second venting channel segment (122), and the at least one second venting channel segment (122) being connected to the compartment wall (111) of the battery compartment (110).

3. The energy storage container (100) according to claim 1, wherein the plurality of batteries (10) are connected in one-to-one correspondence to a plurality of venting channels (120), the plurality of venting channels (120) being all connected to the compartment wall (111) of the battery compartment (110).

4. The energy storage container (100) according to claim 1, wherein the compartment wall (111) of the battery compartment (110) is provided with a weak region (112), and the venting channel (120) connects the battery (10) with the weak region (112),
wherein a thickness of the weak region (112) is less than those of the other regions of the compartment wall (111), and the weak region (112) is used to rupture when a gas pressure inside the venting channel (120) is greater than a threshold value so as to relieve the gas pressure.

5. The energy storage container (100) according to claim 1, wherein the compartment wall (111) of the battery compartment (110) is provided with a first pressure relief mechanism (113), and the venting channel (120) connects the battery (10) with the first pressure relief mechanism (113);
the first pressure relief mechanism (113) being used to be actuated when a gas pressure inside the venting channel (120) is greater than a threshold value so as to relieve the gas pressure inside the venting channel (120).

6. The energy storage container (100) according to any one of claims 1 to 5, wherein the battery (10) is provided with a second pressure relief mechanism (101), the second pressure relief mechanism (101) being used to be actuated when a gas pressure inside the battery (10) is greater than a threshold value so as to relieve the gas pressure inside the battery (10); and
the venting channel (120) connecting the second pressure relief mechanism (101) with the compartment wall (111) of the battery compartment (110).

7. The energy storage container (100) according to claim 6, wherein a dimension of the venting channel (120) in a first direction is adapted to a dimension of the second pressure relief mechanism (101) in the first direction, the first direction being parallel to a radial direction of the venting channel (120).

8. The energy storage container (100) according to any one of claims 1 to 7, wherein the battery (10) is provided with a mounting hole, with a first end of the venting channel (120) being inserted into the mounting hole to realize a connection between the venting channel (120) and the battery (10).

9. The energy storage container (100) according to claim 8, wherein a second pressure relief mechanism (101) for the battery (10) is correspondingly provided inside the mounting hole towards the battery (10).

10. The energy storage container (100) according to any one of claims 1 to 9, wherein a second end of the venting channel (120) has a first mounting portion (124) in an annular structure, the first mounting portion (124) being parallel to and abutting against the compartment wall (111) of the battery compartment (110) to realize a connection between the venting channel (120) and the compartment wall ( 111) of the battery compartment (110).

11. The energy storage container (100) according to any one of claims 1 to 10, wherein the compartment wall (111) of the battery compartment (110) has a second mounting portion (114) extending towards the interior of the battery compartment (110), the second mounting portion (114) being sheathed into the inner wall or sleeving the outer wall of the venting channel (120) to realize a connection between the venting channel (120) and the compartment wall (111) of the battery compartment (110).

12. The energy storage container (100) according to any one of claims 1 to 11, wherein at least one end of the venting channel (120) is provided with a sealing member (140), and the venting channel (120) is connected to the battery (10) and/or to the compartment wall (111) of the battery compartment (110) through the sealing member (140).

13. The energy storage container (100) according to claim 12, wherein the sealing member (140) is a sealing gasket or soft rubber.

14. The energy storage container (100) according to any one of claims 1 to 13, wherein the thermal insulation member (130) provided on the venting channel (120) and/or on the compartment wall (111) of the battery compartment (110) comprises: rock wool.
